# EUROPEAN PATENT APPLICATION

(11) **EP 4 224 941 A1**
(43) Date of publication of application: **09.08.2023**
(21) Application number: 21884982.6
(22) Date of filing: 19.10.2021
(51) Int. Cl.: H04W 48/04

(54) **CELL HANDOVER METHOD AND A COMMUNICATION APPARATUS**

(30) Priority: 30.10.2020 CN 202011194454
(71) Applicant: Huawei Technologies Co., Ltd., Shenzhen, Guangdong 518129 (CN)
(72) Inventor: ZENG, Yongbo, Shenzhen, Guangdong 518129 (CN); QIN, Cheng, Shenzhen, Guangdong 518129 (CN); GUO, Tao, Shenzhen, Guangdong 518129 (CN)
(74) Representative: Gill Jennings & Every LLP
(86) International application number: PCT/CN2021/124697
(87) International publication number: WO 2022/089254

(57) **Abstract**

This application discloses a cell handover method and a communication apparatus, to improve a cell handover success rate. The method includes: A first module of a terminal device sends a first request message to a second module, obtains first information from the second module, and assists cell handover based on a first cell handover list. The first request message is used to request the first cell handover list corresponding to a first TAC, the first TAC is a TAC of a current cell of the terminal device, and the first information indicates the first cell handover list. The terminal device may store a cell list corresponding to each line in advance. When the terminal device moves on a line, the terminal device may determine, based on the first TAC, the cell list corresponding to the line to perform cell handover. Because the terminal device obtains in advance the cell list that the line may pass through, the terminal device can avoid unnecessary measurement and avoid blind handover to a cell with poor communication quality, and this may reduce a probability of a cell handover failure.

## Description

### CROSS-REFERENCE TO RELATED APPLICATIONS

This application claims priority to Chinese Patent Application No. 202011194454.9, filed with the China National Intellectual Property Administration on October 30, 2020 and entitled "CELL HANDOVER METHOD AND COMMUNICATION APPARATUS", which is incorporated herein by reference in its entirety.

### TECHNICAL FIELD

This application relates to the field of cell handover technologies, and in particular, to a cell handover method and a communication apparatus.

### BACKGROUND

As a terminal device moves, the terminal device may move from a coverage area of a cell to a coverage area of another cell. To ensure service continuity and communication quality of the terminal device, the terminal device needs to perform cell reselection (reselection) or cell handover (handover). Both cell handover and cell reselection require the terminal device to perform cell measurement. However, if the terminal device moves fast, the terminal device needs to frequently interact with a network device to obtain measurement configuration and a neighboring cell list, and the terminal device may need to measure all neighboring cells in the neighboring cell list. Even before the terminal device measures some neighboring cells, the terminal device has moved out of coverage areas of the neighboring cells, causing a cell handover failure.

### SUMMARY

This application provides a cell handover method and a communication apparatus, to improve a cell handover success rate and reduce a cell handover delay.

According to a first aspect, a cell handover method is provided. The method may be performed by a communication apparatus. The communication apparatus may be a terminal device or a communication apparatus that can support the terminal device in implementing a function required by the method, for example, a chip system. The following uses an example in which the communication apparatus is a terminal device for description. The method includes:

A first module of a terminal device sends a first request message to a second module of the terminal device, obtains first information transferred from the second module, and assists cell handover based on a first cell handover list, where the first request message is used to request a first cell handover list corresponding to a first tracking area code (tracking area code, TAC), the first TAC is a TAC of a current cell of the terminal device, and the first information indicates the first cell handover list. In this solution, the terminal device may determine a corresponding first cell handover list based on the first TAC of the current cell of the terminal device, to assist cell handover. In an application scenario of a fixed path, for example, the terminal device moves on a fixed path, it is unnecessary to read all cell handover lists corresponding to the entire fixed path into the first module, for example, a modem, thereby saving memory of the modem. This is applicable to an application scenario in which there are a plurality of fixed paths.

In a possible implementation, the first request message includes the first TAC, the first TAC corresponds to a first line, and the first cell handover list is a cell handover list corresponding to the first line. In this solution, a cell handover list corresponding to a plurality of lines may be determined in advance. It should be understood that each line has a corresponding TAC, and the second module of the terminal device may determine the first line corresponding to the first TAC, to determine the first cell handover list corresponding to the first line. In this way, the network device does not need to frequently obtain and notify the terminal device of the cell list used for cell handover, and the first cell handover list stored in the terminal device occupies less content, thereby further saving modem memory.

In a possible implementation, the first request message further includes a first cell identifier, and the first line is a line corresponding to the first TAC and the first cell identifier. In this solution, a corresponding line is determined based on the first TAC and the first cell identifier, to determine a cell handover list corresponding to the line. It should be understood that, because a same TAC may be corresponding to one or more cells, a same TAC may be corresponding to one or more lines, the terminal device may determine fewer lines based on the first TAC and the first cell identifier, to determine the first cell handover list including fewer cells, thereby saving more modem memory.

In a possible implementation, before a first module of a terminal device sends a first request message to a second module of the terminal device, the method further includes:
The first module receives a TAC list from the second module, where the TAC list includes a correspondence between a TAC and a line.

The first module determines, based on the TAC list, a first line corresponding to the first TAC.

That a first module of a terminal device sends a first request message to a second module of the terminal device includes: The first module sends, to the second module, the first request message carrying the first line.

In this solution, the second module may send, to the first module, a TAC list indicating the correspondence between a TAC and a line. It should be understood that a same TAC may correspond to one or more lines, and each line has a corresponding cell handover list. The first module may determine the first line based on the TAC list and the first TAC, to request a cell handover list corresponding to the first line from the second module.

In a possible implementation, after the first module obtains first information from the second module, the method further includes:

The first module determines whether the first line includes a line corresponding to the first cell identifier, and resends the first request message to the second module when the first line does not include the line corresponding to the first cell identifier. In addition, the second module may delete the first cell handover list. It should be understood that if the first line does not include the line corresponding to the first cell identifier, that is, the first cell handover list determined based on the first TAC does not include the current cell of the terminal device, it may be considered that the first cell handover list is not optimal, and the second module deletes the first cell handover list, to save storage space of the second module. In addition, the first module may re-request a cell handover list used to assist cell handover from the second module, to obtain a better cell handover list.

In a possible implementation, the first cell handover list includes a cell identifier of a cell on the first line and frequency information used by each cell.

In a possible implementation, that the first module assists cell handover based on the first cell handover list includes:
The first module determines, based on the first cell handover list, a frequency after a current frequency, measures a cell corresponding to the frequency after the current frequency, and reports a measurement result to a network device. In this solution, the first module may determine frequencies that the terminal device may pass through in advance, to measure these frequencies without being notified by the network device, that is, interaction with a network device is reduced.

In a possible implementation, the first information further includes a second cell handover list corresponding to a second line, the second line is different from the first line, and the second line is a line in a moving direction of the first line. In this solution, the first information may include cell handover lists corresponding to a plurality of lines. In this way, after assisting cell handover based on the first cell handover list corresponding to the current line, the first module may assist cell handover based on a second cell handover list corresponding to a line closest to the current line. In this way, a cell handover delay caused by frequent obtaining of a new cell handover list by the terminal device because the first cell handover list includes a few cells is avoided.

In a possible implementation, before the first module obtains first information from the second module, the method further includes:
The second module determines a data volume included in the first cell handover list; and when the data volume is greater than or equal to a data volume threshold, the second module transfers the first cell handover list to the first module, or when the data volume is less than the data volume threshold, the second module transfers the first cell handover list and the second cell handover list to the first module. In this solution, when the first cell handover list includes a small amount of data, it may be considered that the first cell handover list includes a small quantity of cells or a small quantity of corresponding base stations. In this case, to avoid a cell handover delay caused by frequently obtaining of a new cell handover list by the terminal device, the second module may send the first cell handover list and the second cell handover list to the first module. Certainly, if the first cell handover list includes a large amount of data, there is a low probability that the terminal device obtains the new cell handover list. In this case, the second module may send the first cell handover list to the first module, to save storage space of the first module as much as possible.

In a possible implementation, after the first module assists cell handover based on the first cell handover list, the method further includes: The first module assists cell handover based on the second cell handover list. In this solution, it may be considered that it first moves along a line corresponding to the first cell handover list, and then moves along a line corresponding to the second cell handover list. In this case, after assisting cell handover based on the first cell handover list, the first module does not need to request a new cell handover list again, and may directly assist cell handover based on the second cell handover list, to reduce a cell handover delay as much as possible.

In a possible implementation, that a first module of a terminal device sends a first request message to a second module of the terminal device includes:
The first module sends the first request message to the second module when determining that the terminal device is in a preset module or a moving speed of the terminal device is greater than a preset threshold. It should be understood that the terminal device moves at a high speed, and the network device needs to frequently obtain a cell handover list. Therefore, in this solution, only when the terminal device moves at a high speed, for example, the terminal device is in a high-speed railway mode, the first module is triggered to send the first request message to the second module.

In a possible implementation, the first module is a modem, and the second module is an application processor.

According to a second aspect, another cell handover method is provided. The method may be performed by a communication apparatus. The communication apparatus may be a terminal device or a communication apparatus that can support the terminal device in implementing a function required by the method, for example, a chip system. The following uses an example in which the communication apparatus is a terminal device for description. The method includes:

A first module of a terminal device sends, to a second module of the terminal device, a first request message that carries a first cell identifier, where the first request message is used to request a first cell handover list corresponding to the first cell identifier, and the first cell identifier is an identifier of a current cell of the terminal device.

The first module obtains first information from the second module, where the first information indicates the first cell handover list.

The first module assists cell handover based on the first cell handover list.

In a possible implementation, the first cell identifier corresponds to a first line, and the first cell handover list is a cell handover list corresponding to the first line.

In a possible implementation, the first cell handover list includes a cell identifier on the first line and frequency information used by each cell.

In a possible implementation, that the first module assists cell handover based on the first cell handover list includes:
The first module determines a frequency after a current frequency based on the first cell handover list.

The first module measures a cell corresponding to the frequency after the current frequency, and reports a measurement result to a network device.

In a possible implementation, the first information further includes a second cell handover list corresponding to a second line, the second line is different from the first line, and the second line is a line in a moving direction of the first line.

In a possible implementation, before the first module obtains first information from the second module, the method further includes:
The second module determines a data volume included in the first cell handover list.

The second module transfers the first cell handover list to the first module when the data volume is greater than or equal to a data volume threshold.

The second module transfers the first cell handover list and the second cell handover list to the first module when the data volume is less than the data volume threshold.

In a possible implementation, after the first module assists cell handover based on the first cell handover list, the method further includes:
The first module assists cell handover based on the second cell handover list.

In a possible implementation, that a first module of a terminal device sends a first request message to a second module of the terminal device includes:
The first module sends the first request message to the second module when determining that the terminal device is in a preset mode or a moving speed of the terminal device is greater than a preset threshold.

In a possible implementation, the first module is a modem, and the second module is an application processor.

A difference between the second aspect and the first aspect lies in that the first module requests to obtain the cell handover list corresponding to the first cell identifier, which is similar to the first aspect. For specific effects of the second aspect and each possible implementation of the second aspect, refer to technical effects of the first aspect and each implementation of the first aspect. Details are not described herein again.

According to a third aspect, an embodiment of this application further provides an electronic device. The electronic device includes a display, one or more processors, a modem, a memory, and one or more programs. The one or more programs are stored in the memory, the one or more programs include instructions, and when the instructions are executed by the electronic device, the electronic device is enabled to perform the method steps according to any one of the first aspect.

According to a fourth aspect, an embodiment of this application further provides an electronic device. The electronic device may include modules/units that perform the method according to any one of the first aspect and the possible designs of the first aspect. These modules/units may be implemented by hardware, or may be implemented by hardware by executing corresponding software.

According to a fifth aspect, an embodiment of this application further provides a computer-readable storage medium. The computer-readable storage medium includes program instructions, and when the program instructions run on an electronic device, the electronic device is enabled to perform the method according to any one of the first aspect.

According to a sixth aspect, an embodiment of this application further provides a program product. When the program product runs on an electronic device, the electronic device is enabled to perform the method according to any one of the first aspect.

### BRIEF DESCRIPTION OF DRAWINGS

FIG. 1 is a schematic diagram of network deployment on a fixed path according to an embodiment of this application;
FIG. 2 is a schematic flowchart of a second cell handover method according to an embodiment of this application;
FIG. 3 is a schematic diagram of a correspondence between a TAC, a cell, and a line;
FIG. 4 is a schematic flowchart of a third cell handover method according to an embodiment of this application;
FIG. 5 is a schematic diagram of dividing a fixed path into a plurality of lines and sorting the plurality of lines;
FIG. 6 is a schematic flowchart of a fourth cell handover method according to an embodiment of this application;
FIG. 7 is a schematic flowchart of a fifth cell handover method according to an embodiment of this application; and
FIG. 8 is a schematic diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

First, some terms in embodiments of this application are explained and described, to facilitate understanding of a person skilled in the art.
(1) Network device: A network device includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, and transmit a data packet from a terminal to a core network device, or transmit a data packet from a core network device to a specific terminal. The access network may include another network side device that support IP network functions. The base station includes one or more baseband processing units and one or more radio frequency units, and carries one or more cellular cells. The RSU may be a fixed infrastructure entity that supports a V2X application, and may exchange messages with another entity that support the V2X application. The network device may further coordinate attribute management of the air interface. For example, the network device may include an evolved NodeB (NodeB, eNB, or e-NodeB, evolutional NodeB) in a long term evolution (long term evolution, LTE) system or a long term evolution-advanced (long term evolution-advanced, LTE-A) system, or may include a next generation NodeB (next generation NodeB, gNB) in a 5^{th} generation (the 5^{th} generation, 5G) mobile communication technology new radio (new radio, NR) system (also referred to as an NR system), or may include a centralized unit (centralized unit, CU) and a distributed unit (distributed unit, DU) in a cloud radio access network (cloud radio access network, Cloud RAN) system. This is not limited in embodiments of this application.
(2) The terminal device includes a device that provides voice and/or data connectivity for a user, and specifically, includes a device that provides voice for a user, or includes a device that provides data connectivity for a user, or includes a device that provides voice and data connectivity for a user. For example, the terminal device may include a handheld device having a wireless connection function, or a processing device connected to a wireless modem. The terminal device may communicate with a core network through a radio access network (radio access network, RAN), and exchange voice or data with the RAN, or exchange voice and data with the RAN. The terminal device may include user equipment (user equipment, UE), a wireless terminal device, a mobile terminal device, a device-to-device communication (device-to-device, a D2D) terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), and a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example rather than limitation, in this embodiment of this application, the terminal device may alternatively be a wearable device. The wearable device may also be referred to as a wearable intelligent device, an intelligent wearable device, or the like, and is a general term for a wearable device, such as glasses, gloves, watches, clothing, and shoes, that is intelligently designed for daily wear by using a wearable technology. The wearable device is a portable device that is directly worn on a body or integrated into clothes or accessories of a user. The wearable device is not only a hardware device, but also implements powerful functions through software support, data interaction, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBU).

In this embodiment of this application, the terminal device may further include a relay (relay). Alternatively, it may be understood that all devices that can perform data communication with the base station may be considered as terminal devices.

In embodiments of this application, an apparatus configured to implement a function of the terminal may be a terminal device, or may be an apparatus, for example, a chip system, that can support the terminal device in implementing the function. The apparatus may be installed in the terminal device. In this embodiment of this application, the chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

The following describes technical features in embodiments of this application.

Due to movement of a terminal device, the terminal device may move from a coverage area of a cell to a coverage area of another cell. Each cell may be identified by using a unique number, and the number is referred to as a cell identifier (Cell Identity, Cell ID). In this application, the Cell ID is described by using a Cell Global Identity (cell global identifier, CGI) defined in the standard as an example. To ensure service continuity and communication quality of the terminal device, the terminal device needs to perform cell reselection (reselection) or cell handover (handover). Both cell handover and cell reselection require the terminal device to perform cell measurement. For example, the network device sends measurement configuration information (measConfig) to the terminal device. The measurement configuration information may include information such as a measurement object (measurement object, MO), a quantity configuration (quantity configuration), and a measurement gap configuration. A measurement parameter of the measurement object may include a configuration of a measurement resource on a frequency corresponding to the measurement object, for example, one or more cells on the frequency. In other words, the measurement parameter of the measurement object sent by the network device to the terminal device may include a cell list. The cell list includes one or more cells on the frequency.

The terminal device performs cell measurement based on the measurement configuration information, and reports a measurement result to the network device. The terminal device may receive reference signals from a plurality of cells, and measure and calculate reference signal received power (Reference Signal Received Signal, RSRP) and reference signal received quality (Reference Signal Received Quality, RSRQ) of the plurality of cells, a received signal strength indicator (Received Signal Strength Indicator, RSSI), and a signal to interference noise ratio (Signal to Interference Noise Ratio, SINR). After the terminal device is in an idle (Idle) state and camps on a serving cell, the terminal device measures a camped cell and a neighboring cell. If signal quality of the neighboring cell and signal quality of the camped cell meet a cell reselection criterion, the terminal device may reselect a cell with better signal quality.

For a terminal device in an RRC connected mode, the network device may configure the terminal device to measure a neighboring cell. For example, the network device may send a neighboring cell measurement list to the terminal device. The terminal device may measure neighboring cells in the list, to obtain a measurement result, for example, signal quality of each neighboring cell. Then, the terminal feeds back the measurement result of the neighboring cells and a measurement result of a cell (also referred to as the serving cell) that currently serves the terminal device to the network device. The network device may determine, based on the measurement result of the serving cell and the measurement result of the neighboring cells, to hand over the terminal device to a cell with better signal quality.

Cell reselection is mainly implemented by the terminal device. After a specific trigger condition and an access criterion are met, the terminal device completes cell reselection. However, cell handover requires that the network device uses a series of radio resource management (radio resource management, RRM) measurement configurations and the network device determines a target cell based on feedback of the terminal device. If the RRM measurement result meets a specific condition, the network device may send a handover command to the terminal device, to indicate the terminal device to hand over from a cell to another cell.

However, due to a limited coverage of each cell, (For example, a coverage radius of cells in urban areas is several hundred meters, and a coverage radius of dedicated-network cells along a high-speed railway may reach several kilometers.) If the terminal device moves at a high speed, the terminal device frequently performs cell reselection or cell handover in a movement process. When a communication data service is being performed on the terminal device, the terminal device in the RRC connected state needs to frequently interact with a network, to obtain neighboring cell measurement configuration information from the network device, and perform measurement based on base station instructions. In addition, the terminal device may need to perform inter-frequency measurement by switching a frequency. In this process, because the signal quality of the serving cell deteriorates quickly and there is a great amount of terminal measurement, the terminal device cannot report the measurement result timely. As a result, signaling exchange fails during the handover, and further the cell handover fails.

For example, in a possible scenario, if the terminal device is located on a vehicle that moves at a high speed, such as a high-speed rail or a subway, the terminal device moves along with the movement of the vehicle. Because the terminal device moves fast, the terminal device is also handed over from a cell to another cell fast. However, the network device cannot accurately know a moving direction of the terminal, so the network device uses all cells associated with a current serving cell as neighboring cells, and indicates, based on the measurement configuration information, the terminal device to perform measurement. On the one hand, a quantity of neighboring cells may be large. On the other hand, for a terminal device having a fixed moving direction, some neighboring cells actually do not need to be measured. Especially along the high-speed railway, some operators have deployed high-speed rail communication private networks and non-high-speed railway communication networks that provide services to the public. However, the serving cell may configure both a cell in the high-speed railway communication private network and a cell in the non-high-speed railway communication network as neighboring cells. However, actually, if a terminal device moving along with the high-speed railway accesses the cell in the non-high-speed railway communication network, communication performance may deteriorate, for example, frequent handover failures occur. Therefore, a large quantity of neighboring cell measurement configurations or unnecessary neighboring cell measurement configurations may result in long measurement time and delayed reporting of results, leading to handover failures. In addition, a cell with better signal quality in a measurement process does not mean that communication quality is also good after the terminal device is handed over For example, in high-speed railway communication, if the terminal device is handed over to a cell whose signal quality is good at a measurement moment but whose coverage area is small, a quantity of handover times increases because a handover interval is narrowed, and a handover failure probability increases.

It should be understood that, if a vehicle travels along a specified line, for example, a running line of a high-speed railway or a subway is fixed, network deployment and parameter configuration along the line are also stable, and a cell through which the user carries the terminal device to take the vehicle and a subsequent target cell are clear. For ease of description, in the following, a fixed line or a same path that the user often passes through when the terminal device moves with a vehicle such as a high-speed railway or a subway that the user takes is referred to as a fixed path. A parameter configuration of a communication network deployed along a road such as a subway line, a high-speed railway line, and a highway is generally stable, and a base station or a cell that the terminal device travels when passing through a fixed path is also stable.

Because a cell corresponding to a fixed path is usually stable, an embodiment of this application provides a cell handover method. In the method, the terminal device may assist the terminal device in performing cell handover based on a cell list corresponding to the fixed path. For example, the terminal device may store a cell list corresponding to each fixed path in advance. When the terminal device moves on a fixed path, the terminal device may perform cell handover based on the cell list corresponding to the fixed path. Because the terminal device obtains in advance the cell list that the fixed path may pass through, the terminal device can avoid unnecessary measurement and avoid blind handover to a cell with poor communication quality, and this may reduce a probability of a cell handover failure and an RRC reestablishment.

For example, the terminal device measures a cell in the cell list corresponding to the fixed path, and feeds back a measurement result to the network device, so that the network device selects a cell to which the terminal device is to be handed over. It should be understood that a cell list that is corresponding to a fixed path and that is stored in the terminal device includes all cells that can be obtained on the fixed path. However, in a movement process, the terminal device should be handed over to a cell that the terminal device has not passed through. Because the cell list corresponding to the fixed path is arranged in a cell distribution sequence, a handover record of the terminal device on the fixed path, for example, a cell to be handed over, may be used to determine a moving direction of the terminal device. Therefore, the terminal device may determine to measure, based on the moving direction of the terminal device, some cells that match the moving direction of the terminal device in the cell list corresponding to the fixed path, and does not need to measure all cells, to avoid measuring an unnecessary cell, for example, a cell in a direction opposite to the moving direction. In this way, the terminal device may save measurement time and energy consumption of the terminal device.

For ease of understanding, the following describes a cell handover method provided in embodiments of this application with reference to the accompanying drawings. Because some or all cells in the cell list corresponding to the fixed path are used for handover of the terminal device, the cell list may also be referred to as a cell handover list. For ease of description, the cell list corresponding to the fixed path is referred to as a preset cell handover list (or may also be referred to as a preset path for short) in the following. In this embodiment of this application, the preset cell handover list includes a plurality of pieces of cell information arranged in sequence, and each piece of cell information includes at least one of the following information: a cell identifier, frequency information, a TAC (Tracking Area Code, tracking area code), and a PLMN (Public Land Mobile Network, public land mobile network) information, a PCI (Physical Cell Identity, physical cell identifier), or the like. Cells in the preset cell handover list may be grouped according to a specific rule. Each group includes one or more cells, and each group may be referred to as a node. Therefore, dividing a group may also be referred to as dividing a node. In this embodiment of this application, the cells in the preset cell handover list are grouped or divided into nodes based on geographical distribution.

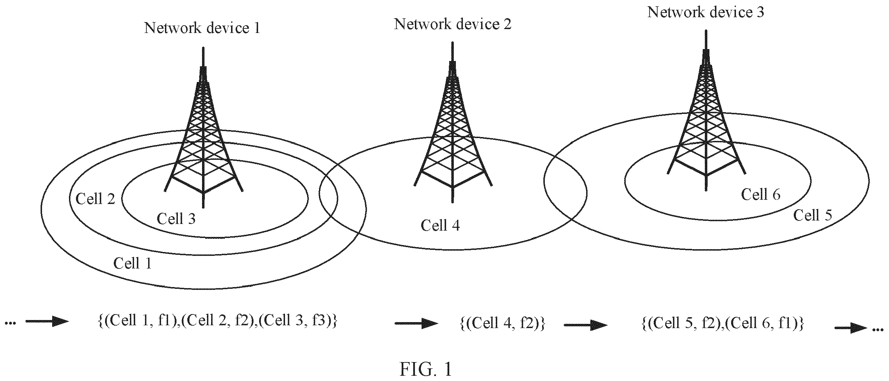

For example, FIG. 1 is a schematic diagram of network deployment on a fixed path according to an embodiment of this application. It should be understood that in some geographical areas, an operator deploys a large quantity of cells, and may obtain better coverage performance. In some geographic areas, a small quantity of cells are deployed due to deployment conditions or environment. A cellular communication network on the fixed path shown in FIG. 1 includes three nodes, respectively corresponding to respective network devices. The three network devices are a network device 1, a network device 2, and a network device 3. It should be understood that one node in this application may alternatively include all cells carried by one or more network devices, and a plurality of cells carried by one network device may be divided into different nodes. As shown in FIG. 1, the network device 1 of a node 1 bears three cells (cell), and cell identifiers of the three cells are respectively denoted as cell 1, cell 2, and cell 3. The network device 2 of a node 2 bears one cell, and the cell identifier is denoted as cell 4. The network device 3 of a node 3 bears two cells, and cell identifiers are marked as cell 5 and cell 6. For example, a frequency corresponding to cell 1 is f1, a frequency corresponding to cell 2 is f2, a frequency corresponding to cell 3 is f3, a frequency corresponding to cell 4 is f2, a frequency corresponding to cell 5 is f2, and a frequency of cell 6 is f1.

Corresponding cells on the path shown in FIG. 1 are stable, that is, cell 1 to cell 6 in FIG. 1. Therefore, for network deployment of the fixed path in FIG. 1, a preset cell handover list corresponding to the fixed path is fixed or stable. In FIG. 1, the preset cell handover list may be determined based on a coverage area of a cell, geographical distribution, or a network deployment condition. For example, the preset cell handover list may be represented as { {(cell 1, f1), (cell 2, f2), (cell 3, f3)}, {(cell 4, f2)}, {(cell 5, f2), (cell 6, f1)}}. To be specific, the preset cell handover list is divided into three nodes: node 1 includes three cells, and attribute information of node 1 includes attribute information {(cell1, f1), (cell 2, f2), (cell 3, f3)} of the three cells; node 2 includes one cell, and attribute information of node 2 includes attribute information {(cell 4, f2)} of the one cell; node 3 includes two cells, and attribute information of node 3 includes attribute information {(cell 5, f2), (cell 6, f1)} of the two cells. In addition to the cell identifier and the frequency information, the attribute information of the cell may alternatively include other information. This is not limited in this application.

The terminal device may prestore the preset cell handover list, and predetermine, based on a moving direction of the terminal device, a cell that may subsequently pass through. For example, the terminal device is currently located in a coverage area of cell 4, has accessed cell 4, and the terminal device has recorded information about handover from cell 2 to cell 4. The terminal device performs the following operations based on the handover record and cell grouping and arrangement information in the preset cell handover list: It may be determined that the terminal device moves from the network device 2 to the network device 3. In this case, when at least one of an RSRP, RSRQ, an RSSI, and a SINR of Cell 4 received by the terminal device meets a measurement trigger condition, it may be predetermined that the terminal device may pass through cell 5 and cell 6. In addition, cell 5 and cell 6 may be preferentially measured based on the prestored preset cell handover list, and the obtained measurement result is sent to the network device. Because the terminal device determines and measures a cell that may pass through in advance, a probability of a cell handover failure and an RRC reestablishment can be reduced.

Generally, the preset cell handover list belongs to application layer information of the terminal device. An application (Application, app for short) at the application layer obtains the preset cell handover list from a memory (for example, a read-only memory) of the terminal device or from a network server. In terms of architecture division, an application processor (Application Processor, AP) module of the app located in the terminal device needs to transfer the preset cell handover list to a modem (Modem) module of the terminal device. The Modem module may store a part or all of the preset cell handover lists transferred by the app. In this application, without causing confusion, an operation on the app may be understood as an operation performed by the AP module.

The fixed path, for example, a cellular network along a high-speed railway, is usually deployed along a line. Therefore, a preset cell handover list of the fixed path may be divided into a plurality of segments or a plurality of lines based on an interval of the fixed path. The cellular network along the high-speed railway is used as an example. A preset cell handover list on a Beijing-Shanghai line of the high-speed railway and a preset cell handover list on a Beijing-Guangzhou line of the high-speed railway may be divided into at least two segments or two lines by the high-speed railway line, and one segment includes the preset cell handover list on the Beijing-Shanghai line, and one segment includes the preset cell handover list on the Beijing-Guangzhou line. Further, the preset cell handover list on the Beijing-Shanghai line may be further divided into smaller segments based on a network deployment condition or the like. These small segments of the preset cell handover list are referred to as lines (lines) in this application. Optionally, another name may be used to represent the small segment of the preset cell handover list. This is not limited in this application.

Figure 1 uses network deployment with a fixed path as an example. It should be understood that the terminal device may move on a plurality of fixed paths. For example, the terminal device may move along with the high-speed railway, and the terminal device may move on railway lines across the country. The terminal device can move on railway lines across the country, or on a road or subway line in a city. To assist in cell handover when the terminal device moves on different fixed paths, the terminal device may prestore corresponding preset cell handover lists on the plurality of fixed paths. Alternatively, the terminal device may obtain a preset cell handover list on a corresponding path from a network side device (for example, a network server or a base station) in real time based on an actual location or an accessed cell.

Because storage space required by the terminal device for storing the preset cell handover lists respectively corresponding to the plurality of fixed paths is large, in this embodiment of this application, the preset cell handover list stored in the modem module of the terminal device may also be adjusted based on a cell that the terminal device currently passes through, so that all the preset cell handover lists do not need to be stored, to save the storage space of the modem module as much as possible. The following describes a second cell handover method provided in embodiments of this application with reference to the accompanying drawings.

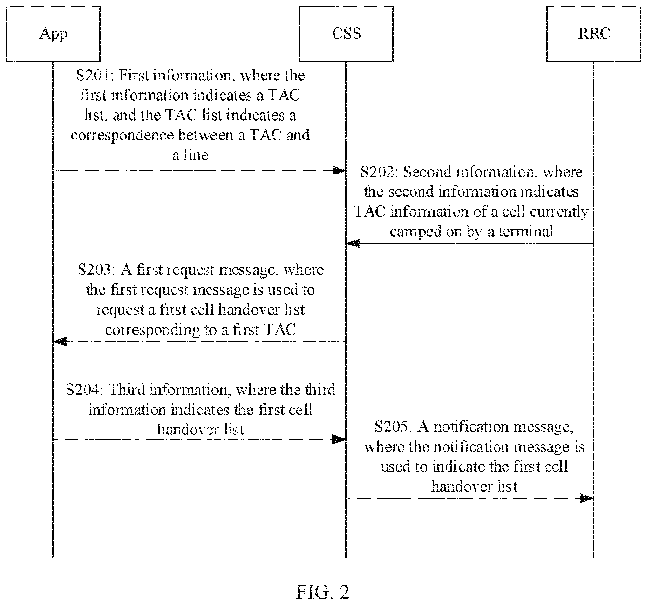

FIG. 2 is a schematic flowchart of a second cell handover method according to an embodiment of this application. In the method, a cell handover list associated with a TAC may be selected based on the TAC corresponding to a current serving cell of a terminal device (if the terminal device is in an idle state, the cell is a camped cell). The terminal device may perform cell handover based on the cell handover list. The process of this method is described as follows.

S201: An application processor of the terminal device sends first information to a common search service (common search service, CSS) in a modem, where the first information indicates a TAC list, and the TAC list includes a correspondence between a TAC and a line.

It should be understood that the terminal device moves on a fixed path, and in a movement process, a network is deployed on the fixed path. A preset cell handover list divides cells in the list into a plurality of nodes based on network deployment or coverage characteristics, and each node may include one or more cells. Each cell has its own TAC. In actual network deployment, network operators or network regulators may allocate one or more TAC addresses to a city, or a plurality of cities may share a same TAC address to facilitate network maintenance or management. A TAC address may contain a plurality of cellular cells. That is, a plurality of cells may belong to different TACs or a same TAC. TAC information of a cell may be obtained from a message sent by the cell, for example, from a broadcast message. After obtaining TAC information of a corresponding cell, the terminal device may report a Cell ID (for example, a CGI) and the TAC information of the corresponding cell to a network side device, so that the network side device can maintain an association relationship between a cell identifier and a TAC. The network side device may generate a preset cell list based on the foregoing information reported by the terminal device and a cell handover relationship when the terminal device performs communication. In this embodiment of this application, a cell handover list associated with a TAC may be selected based on the TAC corresponding to a camped cell (or a serving cell) of a current terminal. In this way, all cell handover lists corresponding to an entire fixed path do not need to be read into a modem module, to save memory of the modem module. This is applicable to application scenarios with a plurality of fixed paths.

When the terminal device moves on a fixed path, for example, a first path, the terminal device may notify the CSS of TAC information corresponding to the first path. In a possible implementation, the first path may be divided into a plurality of lines. It should be understood that there is a correspondence between each line and a TAC, one line may be corresponding to one or more TACs, and one TAC may be corresponding to one or more lines. For example, Table 1 shows a schematic diagram of a correspondence between a line and a TAC.

**Table 1 A correspondence table between lines and TACs**

| Line ID (Lind ID) | TAC |
|---|---|
| ... | ... |
| 1 | TAC 2 |
| 1 | TAC 3 |
| 1 | TAC 4 |
| 2 | TAC 4 |
| 2 | TAC 5 |
| 2 | TAC 6 |
| ... | ... |

Optionally, one correspondence table may also include only a correspondence between a line (line) and a TAC, and a correspondence between each line and a TAC may be classified into different correspondence tables. For example, Table 1 may include only a line whose Line ID is 1 and TAC information corresponding to the line. For example, a correspondence between line 1 and a TAC is shown in Table 2.

**Table 2**

| Line ID (Lind ID) | TAC |
|---|---|
| ... | ... |
| 1 | TAC 2 |
| 1 | TAC 3 |
| 1 | TAC 4 |

A correspondence between line 2 and a TAC is shown in Table 3.

**Table 3**

| Line ID (Lind ID) | TAC |
|---|---|
| 2 | TAC 4 |
| 2 | TAC 5 |
| 2 | TAC 6 |
| ... | ... |

Different TACs may correspond to a same cell or different cells, and one TAC may include one or more nodes. Then, a correspondence between each line and the TAC, node, and cell is shown in Table 4.

**Table 4 A correspondence table among lines, TACs, nodes, and cells**

| Line ID (Lind ID) | TAC | Node ID (Node ID) | Cell ID (Cell ID) |
|---|---|---|---|
| n | TAC 1 | x | c1 |
| n | TAC 1 | x | c2 |
| n | TAC 2 | y | c3 |
| ... | ... | ... | ... |

In Table 4, n represents a line ID, a node numbered x includes two cells, and a node numbered y includes one cell.

In this embodiment of this application, when the terminal device determines that the terminal device moves at a high speed, an app of the terminal device may send the first information to the CSS. The first information may indicate the TAC list corresponding to the first path. In this way, the CSS may know a TAC of a specific line corresponding to the terminal device in a movement process, and determine, with reference to the TAC of the current serving cell (the camped cell in the idle state) from a cell handover list associated with the first path, the cell handover list associated with the TAC. In this way, cells in the moving direction may be preferentially measured, to assist cell handover.

The first information may be carried in an (attention command, AT) command, or may be carried in another possible command. This is not limited in this embodiment of this application. In addition, a specific implementation form of the first information is not limited in this embodiment of this application.

For example, the first information may carry the correspondence shown in Table 1. The CSS receives the first information, obtains a correspondence between a plurality of lines and a TAC in the first information, and stores the correspondence. Alternatively, Table 1 is predefined, and the first information may carry an identifier (index) of Table 1. The CSS receives the first information, determines the correspondence between a plurality of lines and a TAC based on the identifier (index) in Table 1, and stores the correspondence.

In some embodiments, when the terminal device detects that the moving speed of the terminal device is greater than a preset threshold, the app of the terminal sends the first information to the CSS. In some other embodiments, a plurality of working modes of the terminal device may be set, for example, a high-speed railway mode and a common mode. When the terminal device determines that the terminal device is in the high-speed railway mode, the AP of the terminal sends the first information to the CSS. It should be noted that the high-speed railway mode is relative to the common mode. The high-speed railway mode indicates that the terminal device moves at a high speed, and the common mode indicates that the terminal device moves at a low speed. For example, if the terminal device moves at a high speed, the terminal device enters the high-speed railway mode, and the app of the terminal device may obtain the working mode of the terminal. For another example, the terminal device may detect one or more cell identifiers from a network device, to determine whether the one or more cells have a high-speed railway cell identifier (for example, HighSpeedFlag). Provided that the one or more cells have the high-speed railway cell identifier, the terminal device may consider that the working mode of the terminal is the high-speed railway mode. Certainly, a manner in which the terminal device determines whether the terminal device works in the high-speed railway mode is not limited in this embodiment of this application.

In some embodiments, when the terminal device detects or searches for one or more cells on a fixed path that are frequently passed through, the app of the terminal sends the first information to the CSS. The first information may be obtained by the app of the terminal device from a network side device in real time or in advance, or may be obtained by the terminal device by using a computing capability of the terminal device and stored in a memory.

In some embodiments, the terminal device may store the first information in the memory immediately after obtaining the first information, without another trigger condition.

S202: An RRC of the terminal device sends second information to the CSS, where the second information indicates TAC information of a cell currently camped on by the terminal device.

An RRC submodule in the modem module of the terminal device may obtain the TAC, for example, a first TAC, corresponding to the current serving cell of the terminal device, and transfer the first TAC to the app, to request, from the app, a cell handover list associated with the first TAC.

In some embodiments, the modem module of the terminal device obtains status information of the terminal device in real time, to report the TAC of the current serving cell based on the status information. For example, when the terminal device detects that the terminal device is in the high-speed railway mode, each time a cell is accessed, the terminal device transfers the TAC information to which the serving cell belongs to the CSS.

Generally, in a terminal chip module division, a sub-module that implements an RRC function of LTE in the modem module is referred to as an LRRC module. Similarly, a submodule that implements an RRC function of NR in the modem module is referred to as an NRRC module.

After the terminal device obtains the first TAC, the RRC of the terminal device may send the second information to the CSS. The second information may carry the first TAC.

S203: The CSS of the terminal device sends a first request message to the app, where the first request message is used to request a first cell handover list corresponding to the first TAC.

After receiving the second information, the CSS of the terminal device may search one or more tables in Table 1 to Table 4 for one or more lines corresponding to the first TAC. Then, the CSS transfers an identifier of the one or more lines to the app, to request the cell handover list corresponding to the first TAC. For example, the CSS sends, to the app, a request message, for example, the first request message that requests a cell handover list corresponding to the one or more lines. The first request message may carry numbers or identifiers of the one or more lines.

For example, the first TAC is a TAC 4, and after receiving the second information, the CSS determines, according to Table 1, that lines corresponding to the TAC 4 include a line 1 and a line 2. The CSS may send, to the app, the first request message that carries a number of the line 1 and a number of the line 2.

In an embodiment, the CSS transfers the obtained TAC information of the current serving cell to the app, and the app obtains line information based on a correspondence between a line and a TAC, that is, the first request message carries the TAC information.

S204: The app of the terminal device sends third information to the CSS, where the third information indicates the first cell handover list.

After receiving the first request message, the app of the terminal device may determine, based on the number of the one or more lines carried in the first request message and Table 2, one or more pieces of cell information corresponding to the one or more lines, that is, determine the first cell handover list. The example in S203 is still used. To be specific, the first request message includes the number of the line 1 and the number of the line 2. The app receives line ID information of the first request message, and obtains cell identifiers corresponding to the line 1 and the line 2 from Table 2. For example, the cell identifiers are c1 and c2. In this case, the terminal device may determine that cell identifiers included in the first cell handover list are c1 and c2. In some embodiments, the app may transfer all cell handover list information of the line 1 and the line 2 to the CSS, that is, the first cell handover list determined by the terminal device includes c1, c2, and c3.

After determining the first cell handover list, the terminal device may send the first cell handover list to the CSS. For example, the app of the terminal device sends the third information to the CSS, where the third information may carry the first cell handover list including the one or more pieces of cell information. Cell information in the first cell handover list in the third information is already arranged based on a handover relationship, distribution, a network deployment characteristic, and the like, that is, there is a sequence in the cell information. The CSS of the terminal device may store the first cell handover list, and does not need to store the cell handover lists corresponding to the entire fixed path. Therefore, storage space of the CSS can be saved.

S205: The CSS of the terminal device sends a notification message to the RRC, where the notification message indicates the first cell handover list.

After storing the first cell handover list, the CSS of the terminal device may notify the RRC of the cell handover list of a line related to the cell currently camped on by the terminal.

In this embodiment of this application, by exchanging TACs, the CSS in the terminal can dynamically store a cell handover list associated with a TAC corresponding to a currently camped-on cell, and does not need to store the cell handover lists corresponding to the entire fixed path, to save storage space of the CSS.

It should be understood that, if a line corresponding to a TAC includes a large quantity of cells or nodes, limited by a memory of the CSS, for a plurality of lines corresponding to a same TAC address, cell handover lists corresponding to some of the plurality of lines may not be stored in the CSS. Due to the limitation of the memory of the CSS, the cell handover list corresponding to a part of subsequent lines cannot be stored in the CSS. As a result, the terminal cannot identify a cell corresponding to the part of subsequent lines, that is, the terminal cannot assist in handing over to a more appropriate cell.

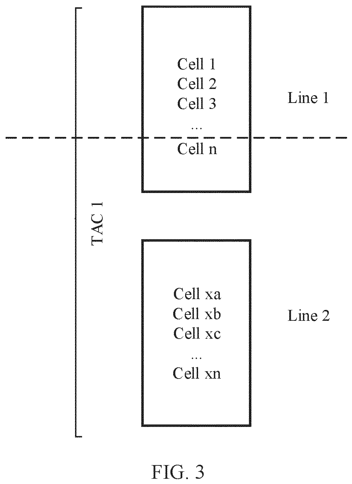

For example, FIG. 3 is a schematic diagram of a correspondence between a TAC, a cell, and a line. In FIG. 3, an example in which a TAC corresponding to a cell currently camped on by the terminal is a TAC 1. In FIG. 3, the TAC 1 covers two lines, and the two lines are a line 1 and a line 2. Cells corresponding to the line 1 include cell 1 -cell n, and cells corresponding to the line 2 include cell xa-cell xn. It is assumed that a cell that the terminal currently camps on is cell xc, and an RRC of the terminal sends a TAC (TAC 1) corresponding to the cell xc to the CSS, and the CSS requests, from the app, a cell handover list corresponding to the TAC (TAC 1) corresponding to the cell xc. The app determines the cell handover list corresponding to the TAC 1, that is, cell 1 to cell n and cell xa-cell xn, and sends the cell handover list to the CSS. The CSS stores cell1-celln and cellxa-cellxn in sequence. However, due to the limitation of a memory of the CSS, the CSS may only store a cell handover list above a dotted line in FIG. 3. To be specific, the cell handover list stored in the CSS does not include cell xc, and the cell handover list learned by the RRC from the CSS also does not include cell xc. This cannot assist the terminal device in handing over to a more appropriate cell, for example, cell xd.

In view of this, an embodiment of this application provides a third cell handover method. In the method, an appropriate cell handover list may be selected from cell handover lists corresponding to an entire fixed path based on the TAC and a cell identifier, to reduce a probability that the terminal cannot identify a line corresponding to a subsequent cell, and it is ensured that the terminal device is handed over to a more appropriate cell.

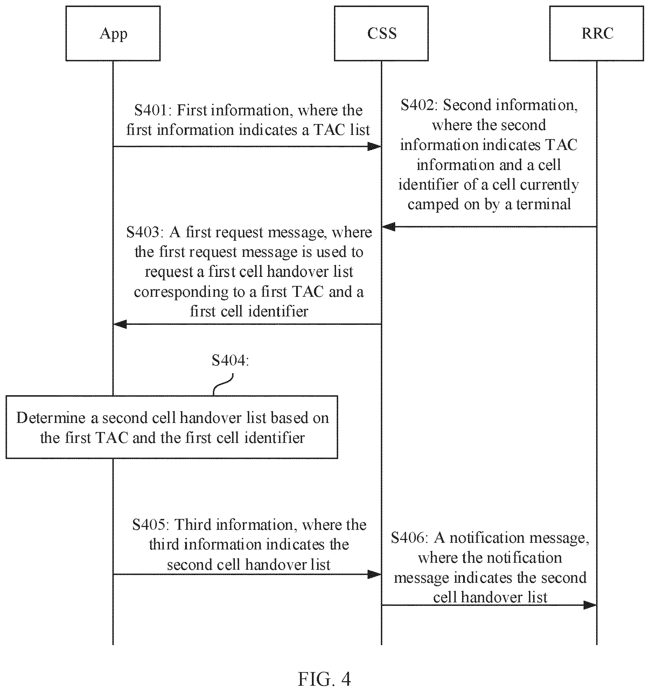

FIG. 4 is a schematic flowchart of a third cell handover method according to an embodiment of this application. The process of this method is described as follows.

S401: An app of a terminal device sends first information to a CSS, where the first information indicates TAC information.

Specific implementation of S401 is the same as specific implementation of S201. For details, refer to related descriptions of S201. Details are not described herein again. In some embodiments, the TAC information (list), that is, a correspondence between a line and a TAC, may be stored only in the app, but not in a memory of the CSS.

S402: An RRC of the terminal sends second information to the CSS, where the second information indicates TAC information and a cell identifier of a current serving cell of the terminal.

A difference between S402 and S202 lies in that, in addition to notifying the CSS of the TAC information of the current serving cell of the terminal device, the RRC of the terminal device further notifies the CSS of an identifier of the current serving cell of the terminal device. For example, the RRC of the terminal device may send the second information to the CSS, where the second information may carry the TAC information of the current serving cell of the terminal device and the cell identifier of the current serving cell. For example, the second information carries a first TAC corresponding to the current serving cell and a first cell identifier.

S403: The CSS of the terminal device sends a first request message to the app, where the first request message is used to request a second cell handover list corresponding to the first TAC and the first cell identifier.

In an implementation, for specific implementation of S403, refer to the foregoing specific implementation of S203. For example, after receiving the second information, the CSS may select, based on the first TAC, one or more lines corresponding to the first TAC and the first cell identifier. Then, the CSS notifies the app of the one or more lines and the first cell identifier information, to request the second cell handover list corresponding to the first TAC and the first cell identifier. Details are not described herein again. A difference between S403 and S203 lies in that the first request message further carries the first cell identifier.

In an implementation, the first request message sent by the CSS of the terminal device to the app includes the first TAC and the first cell identifier. In other words, the CSS of the terminal device may not need to select, based on the first TAC, the one or more lines corresponding to the first TAC and the first cell identifier.

S404: The app of the terminal device determines the second cell handover list based on the first TAC and the first cell identifier.

After receiving the first request message, the app of the terminal may determine the second cell handover list based on the first TAC and the first cell identifier, and send the second cell handover list to the CSS. For example, as shown in FIG. 3, a line corresponding to a first TAC such as a TAC 1 includes a line 1 (Line 1) and a line 2 (Line 2), and a line corresponding to a first cell identifier Cell 3 is the line 1 (Line 1). In this case, the app may determine, based on the first TAC (TAC 1) and the first cell identifier (Cell 3), that the second cell list is a cell handover list included in the line 1.

S405: The app of the terminal device sends third information to the CSS, where the third information indicates the second cell handover list.

For specific implementation of S405, refer to the foregoing specific implementation of S204. A difference lies in that the third information in S405 may carry one or more cell identifiers in the second cell handover list, for example, identifiers of cell 2 and cell 3. Because the second handover cell list includes a cell corresponding to the first cell identifier, that is, the cell handover list stored in the CSS includes a serving cell of the terminal device, a probability that the terminal device cannot identify a cell corresponding to a part of lines arranged behind a preset cell handover list can be reduced, and it is ensured that the terminal device can be handed over to a more appropriate cell.

It should be understood that if a small quantity of network devices are deployed on a line, the line includes a small quantity of cells or nodes, and the second cell handover list also includes a small quantity of cells. In this case, the terminal device performs cell handover based on the second cell handover list. When the terminal device completes handover of all cells included in the second cell handover list, the terminal device further needs to obtain a new cell handover list. To be specific, the app of the terminal device needs to re-identify a movement path, and resends the first information to the CSS, the RRC of the terminal device resends the second information to the CSS, and the CSS re-stores the new cell handover list. Before re-storing the new cell handover list, the CSS needs to match a corresponding cell handover list from the cell handover list corresponding to the entire fixed path based on the cell identifier and/or the TAC, and this may cause a delay of cell handover. Even because the terminal device moves at a high speed, before the new cell handover list is obtained, the terminal device has moved for a long distance. In this case, the obtained new cell handover list is invalid, that is, the terminal device cannot be handed over to a cell included in the new cell handover list.

Therefore, in this embodiment of this application, priorities of a plurality of lines corresponding to the first TAC may be sorted. For example, in this embodiment of this application, priorities may be sorted based on distances between lines. A nearest line has a highest priority, that is, the nearest line is arranged after a line of a current node. In addition to storing the second cell handover list corresponding to the first cell identifier, the CSS may store the corresponding cell handover list based on a priority order of the lines. In this way, the terminal device preferentially performs handover based on a cell in the second cell handover list, and then may continue to perform handover based on another cell handover list stored in the CSS, to avoid a cell handover delay caused by frequent obtaining of a new cell handover list by the terminal device because the second cell handover list includes a few cells.

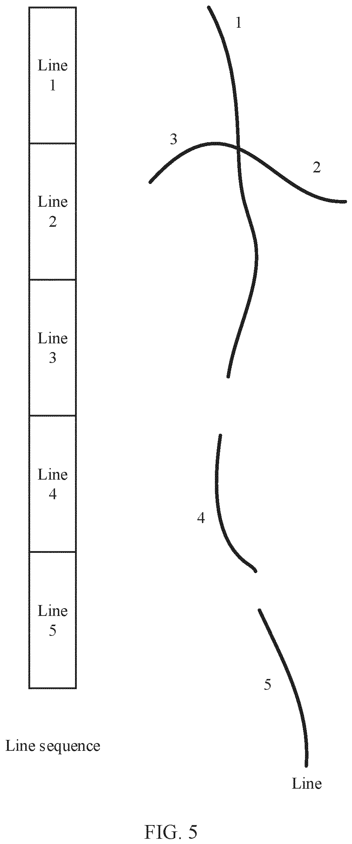

For example, FIG. 5 is a schematic diagram of dividing a fixed path into a plurality of lines and sorting the plurality of lines. FIG. 5 uses five lines as an example, and the five lines are respectively a line 1, a line 2, a line 3, a line 4, and a line 5. In some embodiments, a distance between a geographical location of a first node (last node) of any line and geographical locations of first nodes (last nodes) of the plurality of lines may be calculated, and a line where a node closest to the distance is located may be selected to have a highest priority. That is, a line of the nearest node is arranged behind the line of the current node. For example, a distance between a geographical location of a first node of the line 1 and a geographical location of first nodes from the line 2 to the line 4 is calculated, and it may be determined, based on the distance, that a sequence of the line 1 to the line 5 is sequentially the line 1, the line 2, the line 3, the line 4, and the line 5.

In some other embodiments, a path distance between a first node (last node) of any one line and first nodes (last nodes) of a plurality of lines may be calculated, that is, a quantity of times of jumps in a switching relationship between nodes selected on any two paths may be calculated. That is, a quantity of times that the two selected nodes jump. Similarly, a line where a node closest to the distance is located may be selected to have a highest priority. That is, a line of the nearest node is arranged behind the line of the current node. For example, a path distance between a first node of the line 1 and first nodes from the line 2 to the line 4 is calculated, and it may be determined, based on the path distance, that a sequence of the line 1 to the line 5 is sequentially the line 1, the line 2, the line 3, the line 4, and the line 5.

For example, lines corresponding to the first cell identifier include the line 1, and lines corresponding to the first TAC include the line 1, the line 4, and the line 5. It should be understood that a cell included in the second cell handover list, based on the first cell identifier and the first TAC performed handover by the terminal device corresponds to the line 1. If the line 1 includes a small quantity of cells or nodes, the terminal device needs to first re-obtain a new cell handover list, for example, a cell handover list corresponding to the line 4, and then perform handover based on the cell handover list corresponding to the line 4. However, in this embodiment of this application, a plurality of lines corresponding to the first TAC are sorted in advance, for example, the line 1, the line 4, and the line 5 sequentially. In addition to storing the second cell handover list, the CSS further stores cell handover lists respectively corresponding to the line 4 and the line 5 in sequence. In this way, after performing cell handover based on the second cell handover list, the terminal device may continue to perform handover based on the cell handover list corresponding to the line 4, and subsequently perform handover based on the cell handover list corresponding to the line 5. In this way, the terminal device does not need to re-obtain the cell handover lists respectively corresponding to the line 4 and the line 5, and this reduces a delay caused by line identification in a cell handover process.

It should be noted that the CSS may store a plurality of cell handover lists based on a priority sequence of the plurality of lines. The priority sequence of the plurality of lines is consistent with a moving direction of the terminal device. For example, a plurality of lines may be selected in a moving direction sequence of the terminal device. For ease of understanding, the example shown in FIG. 5 is still used. In FIG. 5, due to splitting of the line 1, the line 2 and the line 3 exist, that is, the line 2 and the line 3 have an intersection point with the line 1. The line 1 to the line 5 are sorted in the moving direction of the terminal device. If the cell identifier of the currently camped-on cell is on the line 1, the line 2 and the line 3 that are numbered adjacent are preferentially selected in the moving direction of the terminal device.

Alternatively, a priority sequence of the plurality of lines has a high correlation with the moving direction of the terminal device, and the plurality of lines may be selected based on a correlation sequence. The correlation here may be measured based on the path distance between the plurality of lines, and a correlation size is relative. For example, a line corresponding to a number that is close to a current line ID in the moving direction of the terminal device is a line that has a large correlation with the moving direction of the terminal device, that is, a closer line ID indicates a greater correlation. For ease of understanding, the example shown in FIG. 5 is still used. The line 2 and the line 3 have an intersection point with the line 1. The line 1 to the line 5 are sorted in the moving direction of the terminal device. If the cell identifier of the currently camped-on cell is on the line 1, lines corresponding to numbers adjacent to numbers of the line 1 are selected in the moving direction of the terminal device, that is, the line 2, the line 3, the line 4, and the line 5. In this case, the terminal device may store cell handover lists corresponding to as many lines as possible, to further reduce a cell handover delay.

S406: The CSS of the terminal device sends a notification message to the RRC, where the notification message indicates the second cell handover list.

After storing the second cell handover list, the CSS of the terminal device may notify the RRC of the cell handover list of a line related to the current serving cell to the terminal device.

In this embodiment of this application, an appropriate cell handover list is selected from cell handover lists corresponding to an entire fixed path based on the TAC and the cell identifier, to reduce a probability that the terminal device cannot be handed over to cells corresponding to some subsequent lines, and it is ensured that the terminal device is handed over to a more appropriate cell.

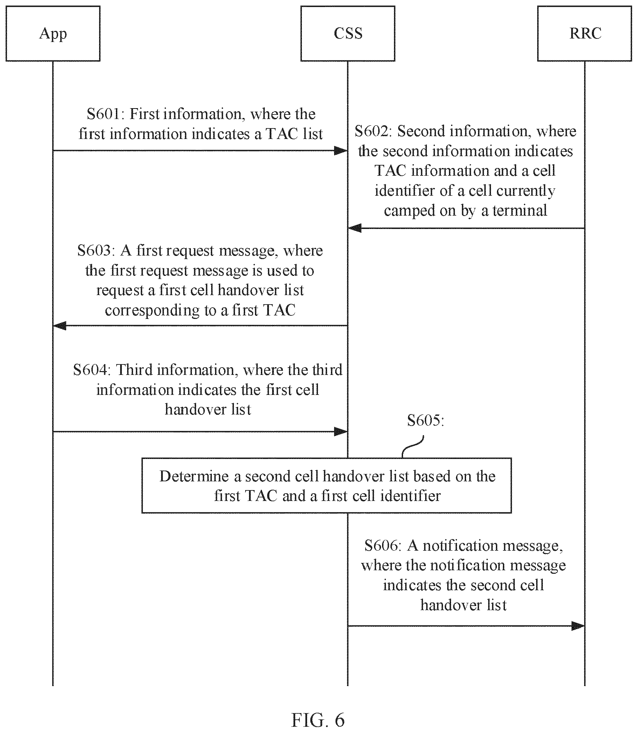

In FIG. 4, the app of the terminal device determines the second cell handover list based on the first TAC and the first cell identifier that are sent by the CSS. In an alternative solution, an embodiment of this application provides a fourth cell handover method. In this solution, the app of the terminal device may determine the first cell handover list based on the first TAC. Further, the CSS of the terminal device determines, based on the first cell identifier, the second cell handover list from the first cell handover list. Specifically, FIG. 6 is a schematic flowchart of a fourth cell handover method according to an embodiment of this application. A process of the method is described as follows.

S601: An app of a terminal device sends first information to a CSS, where the first information indicates a TAC list corresponding to a first path.

Specific implementation of S601 is the same as specific implementation of S201. For details, refer to related descriptions of S201. Details are not described herein again.

S602: The RRC of the terminal device sends second information to the CSS, where the second information indicates TAC information and a cell identifier of a current serving cell of the terminal device.

Specific implementation of S602 is the same as specific implementation of S402. For details, refer to related descriptions of S402. Details are not described herein again.

S603: The CSS of the terminal device sends a first request message to the app, where the first request message is used to request a second cell handover list corresponding to a first TAC.

Specific implementation of S603 is the same as specific implementation of S203. For details, refer to related descriptions of S203. Details are not described herein again.

S604: The app of the terminal device sends third information to the CSS, where the third information indicates the first cell handover list.

Specific implementation of S604 is the same as specific implementation of S204. For details, refer to related descriptions of S204. Details are not described herein again.

S605: The CSS of the terminal device determines the second cell handover list based on the first cell identifier and the first cell handover list.

The CSS of the terminal device may determine, based on the first cell identifier, the second cell handover list from the first cell handover list. In some implementations, the CSS of the terminal may obtain only some cell information in the first cell handover list due to a memory limitation. If the cell information includes the first cell identifier, still perform S606. Otherwise, delete the obtained cell handover list information, return to S603, and continue to obtain cell information from the app until line information including the first cell identifier is obtained.

S606: The CSS of the terminal device sends a notification message to the RRC, where the notification message indicates the second cell handover list.

Specific implementation of S606 is the same as specific implementation of S406. For details, refer to related descriptions of S406. Details are not described herein again.

It should be noted that a difference between the embodiment shown in FIG. 6 and the embodiment shown in FIG. 4 lies in that in the embodiment shown in FIG. 4, the app of the terminal device determines the second cell handover list based on the first TAC and the first cell identifier. In the embodiment shown in FIG. 6, the app of the terminal device first determines the first cell handover list based on the first TAC, and then the CSS of the terminal device determines the second cell handover list based on the first cell identifier. The related technical solution in the embodiment in FIG. 6 may continue to use the related solution in the embodiment in FIG. 4. For example, in the embodiment shown in FIG. 6, priority sorting may also be performed on a plurality of lines corresponding to the first TAC. Details are not described herein again.

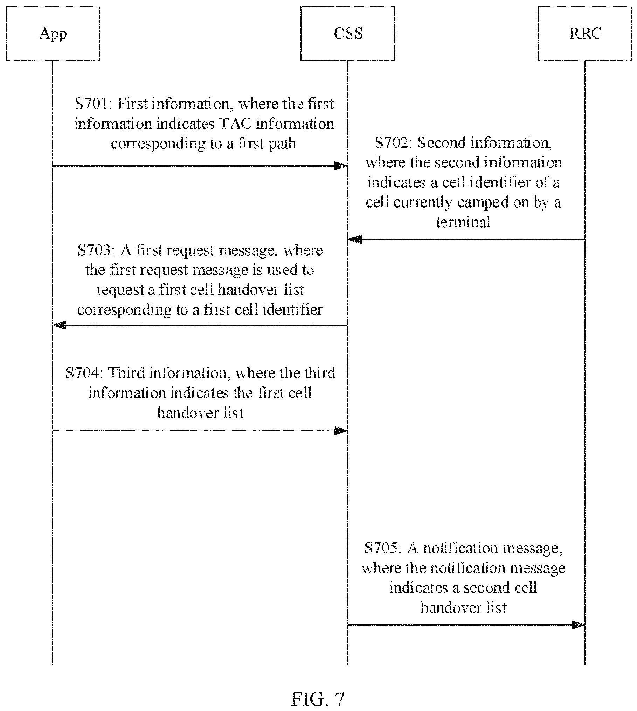

In FIG. 2, FIG. 4, and FIG. 6, the app of the terminal device determines the first cell handover list based on the first TAC sent by the CSS. In an alternative solution, this embodiment of this application provides a fifth cell handover method. In this solution, the app of the terminal device may determine the first cell handover list based on the first cell identifier. Specifically, FIG. 7 is a schematic flowchart of a fifth cell handover method according to an embodiment of this application. A process of the method is described as follows.

S701: An app of a terminal device sends first information to a CSS, where the first information indicates a TAC list corresponding to a first path.

Specific implementation of S701 is the same as specific implementation of S201. For details, refer to related descriptions of S201. Details are not described herein again.

In some embodiments, the app of the terminal device may not send the first information to the CSS.

S702: An RRC of the terminal device sends second information to the CSS, where the second information indicates an identifier of a current serving cell of the terminal device.

S703: The CSS of the terminal device sends a first request message to the app, where the first request message is used to request a first cell handover list corresponding to a first cell identifier, and the first cell identifier is the identifier of the current serving cell of the terminal device.

Specific implementation of S703 is the same as specific implementation of S203. A difference lies in that the first request message carries the first cell identifier. For details, refer to related descriptions of S203. Details are not described herein again.

S704: The app of the terminal device sends third information to the CSS, where the third information indicates the first cell handover list.

Specific implementation of S704 is the same as specific implementation of S204. For details, refer to related descriptions of S204. Details are not described herein again.

S705: The CSS of the terminal device sends a notification message to the RRC, where the notification message indicates the first cell handover list.

Specific implementation of S705 is the same as specific implementation of S406. For details, refer to related descriptions of S406. Details are not described herein again.

It should be noted that, in all embodiments of this application, when the terminal device is in an RRC connected mode, a cell accessed by the terminal device is referred to as a serving cell. When the terminal device is in an RRC idle mode (RRC_IDLE), a cell on which the terminal device camps is referred to as a camped cell. In the foregoing embodiment, if the terminal device is in the RRC idle mode, the serving cell in this embodiment is replaced with the camped cell, so that the method is also applicable to the RRC idle mode.

The embodiment of this application may be applied to an electronic device that supports a cell handover function. The electronic device in this embodiment of this application may also be referred to as a terminal, a terminal device, user equipment (user equipment, UE), or the like. For example, the electronic device in this embodiment of this application may be a portable electronic device, such as a mobile phone, a tablet computer, or a wearable device with a wireless communication function (such as a smartwatch) on which an app can be installed. An example embodiment of a portable electronic device includes but is not limited to a portable electronic device using iOS^{®}, Android^{®}, Microsoft^{®}, or another operating system.

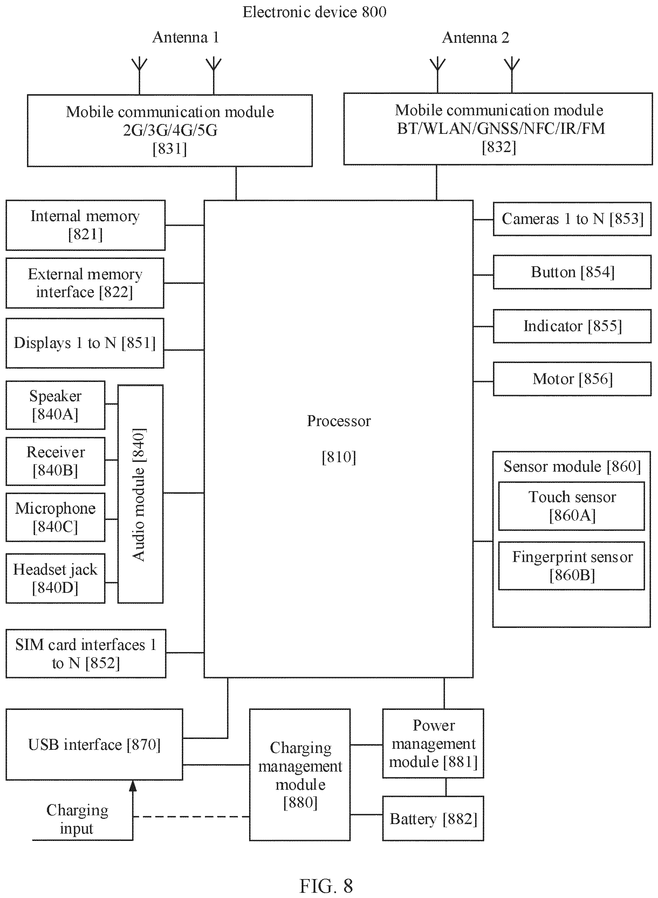

For example, FIG. 8 is a schematic diagram of a structure of an electronic device according to an embodiment of the present invention. Refer to FIG. 8. The electronic device 800 may include a processor 810, an internal memory 821, an external memory interface 822, an antenna 1, a mobile communication module 831, an antenna 2, a wireless communication module 832, an audio module 840, a speaker 840A, a receiver 840B, and a microphone 840C, a headset jack 840D, a display 851, a subscriber identification module (subscriber identification module, SIM) card interface 852, a camera 853, a button 854, a sensor module 860, a universal serial bus (universal serial bus, USB) interface 870, a charging management module 880, a power management module 881 and a battery 882. The sensor module 860 may include a touch sensor 860A and a fingerprint sensor 860B. In some other embodiments, the sensor module 860 may further include a gyroscope sensor, a pressure sensor, an acceleration sensor, a distance sensor, a distance sensor, an optical proximity sensor, a temperature sensor, a bone conduction sensor, and the like. In some other embodiments, the electronic device 800 may further include the button 854, an indicator 855, a motor 856, and the like.

It may be understood that the structure shown in this embodiment of the present invention does not constitute a specific limitation on the electronic device 800. In some other embodiments of this application, the electronic device 800 may include more or fewer components than those shown in the figure, or some components may be combined, or some components may be split, or different component arrangements may be used. The illustrated components may be implemented in hardware, software, or a combination of software and hardware.

The processor 810 may include one or more processing units. For example, the processor 810 may include an application processor (application processor, AP), a modem processor (which may also be referred to as a modem for short), a graphics processing unit (graphics processing unit, GPU), and an image signal processor (image signal processor, ISP), a controller, a video codec, a digital signal processor (digital signal processor, DSP), a baseband processor, and/or a neural-network processing unit (neural-network processing unit, NPU), or the like. Different processing units may be independent components, or may be integrated into one or more processors. The controller may be a nerve center and a command center of the electronic device 800. The controller 810 may generate an operation control signal based on an instruction operation code and a time sequence signal, to complete control of instruction reading and instruction execution. In this embodiment of this application, the processor 810 may execute a program instruction to complete a process of combining or separating control interfaces of at least two smart home devices, to implement a corresponding display effect.

In some embodiments, a memory may be further disposed in the processor 810, configured to store instructions and data. For example, the memory in the processor 810 may be a cache. The memory may be configured to store instructions or data that is just used or cyclically used by the processor 810. If the processor 810 needs to use the instructions or the data again, the processor 810 may directly invoke the instructions or the data from the memory. This helps avoid repeated access, reduces waiting time of the processor 810, and improves system efficiency.

The internal memory 821 may be configured to store computer-executable program code. The executable program code includes the instructions. The processor 810 executes various function applications of the electronic device and data processing by running the instructions stored in the internal memory 821. The internal memory 821 may include a program storage area and a data storage area. The program storage area may store an operating system, an application required by at least one function (for example, a sound playing function or an image playing function), and the like. The data storage area may store data (for example, image data of a smart home device) created during use of the electronic device, and the like. In addition, the internal memory 821 may include a high-speed random access memory, or may include a non-volatile memory, for example, at least one magnetic disk storage device, a flash storage device, a universal flash storage (universal flash storage, UFS), or the like. In this embodiment of this application, the internal memory 821 may store instructions or code used to combine or separate the control interfaces of the at least two smart home devices.

The external memory interface 822 may be configured to connect to an external memory card (for example, a micro SD card), to expand a storage capability of the electronic device. The external memory card communicates with the processor 810 through the external memory interface 822, to implement a data storage function. For example, files such as music and videos can be saved on the external memory card.

A wireless communication function of the electronic device 800 may be implemented through an antenna 1, an antenna 2, a mobile communication module 831, a wireless communication module 832, a modem processor, a baseband processor, and the like.

The antenna 1 and the antenna 2 are configured to transmit and receive electromagnetic wave signals. Each antenna in the electronic device 800 may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 831 may provide a wireless communication solution that is applied to the electronic device 800 and includes a 2G/3G/8G/5G or the like. The mobile communication module 831 may include at least one filter, a switch, a power amplifier, a low noise amplifier (low noise amplifier, LNA), and the like. The mobile communication module 831 may receive an electromagnetic wave signal through the antenna 1, perform processing such as filtering and amplification on the received electromagnetic wave signal, and transmit the electromagnetic wave signal to the modem processor for demodulation. The mobile communication module 831 may further amplify the signal modulated by the modem processor, and convert the signal into an electromagnetic wave signal through the antenna 1. In some embodiments, at least some function modules of the mobile communication module 831 may be disposed in the processor 810. In some embodiments, at least some function modules of the mobile communication module 831 and at least some modules of the processor 810 may be disposed in a same component. For example, the mobile communication module 831 may send a voice to another electronic device, or may receive a voice sent by another electronic device.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. In this embodiment of this application, the modem processor includes an RRC module and a CSS module in this specification. The application processor outputs a sound signal through an audio device (which is not limited to the speaker 870A, the receiver 870B, or the like), or displays an image or a video through the display 851. In some embodiments, the modem processor may be an independent component. In some other embodiments, the modem processor may be independent of the processor 810, and is disposed in a same component as the mobile communication module 831 or another function module. In the embodiment of this application, the application processor, the CSS module, and an app module may perform the methods in the embodiments shown in FIG. 2, FIG. 4, FIG. 6, and FIG. 8.

The wireless communication module 832 may provide a solution to wireless communication applied to the electronic device, for example, a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 832 may be one or more components that integrate at least one communication processing module. The wireless communication module 832 receives an electromagnetic wave signal through the antenna 2, performs frequency modulation and filtering processing on the electromagnetic wave signal, and sends a processed signal to the processor 810. The wireless communication module 832 may further receive a to-be-sent signal from the processor 810, perform frequency modulation and amplification on the signal, and convert the signal into an electromagnetic wave signal through the antenna 2.

In some embodiments, the antenna 1 of the electronic device is coupled to the mobile communication module 831, and the antenna 2 is coupled to the wireless communication module 832, so that the electronic device 800 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 800 may implement an audio function by using the audio module 840, the speaker 840A, the receiver 840B, the microphone 840C, the headset jack 840D, the application processor, and the like. For example, music playback, recording, and etc.

The electronic device 800 may implement a display function by using a GPU, the display 851, the application processor, or the like. The GPU is a microprocessor for image processing, and is connected to the display 851 and the application processor. The GPU is used to perform mathematical and geometric calculations, and render an image. The processor 810 may include one or more GPUs that execute program instructions to generate or change display information.

The display 851 may be configured to display an image, a video, or the like. The display 851 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device 800 may include eight or N displays 851, where N is a positive integer greater than 1. In this embodiment of the present invention, control interfaces of the at least two combined or separated smart home devices may be displayed by using the display 851, which is described in detail below.

The electronic device 800 may implement a photographing function by using a camera 853, an image processor, a video codec, a display 851, an application processor, or the like. The camera 853 may be used to capture a static image or a video. For example, the camera 853 may include a lens and an image sensor. The camera 853 may include a front-facing camera and a rear-facing camera. The image processor may be a DSP, or may be another device configured to perform image processing. In addition, after obtaining a digital image signal, the ISP may directly perform post-image processing, for example, perform algorithm optimization on noise, luminance, and color of the image. The video codec is used to compress or decompress digital video. The electronic device 800 may support one or more video codecs. In this way, the electronic device 800 may play or record videos in a plurality of encoding formats, for example, moving picture experts group (moving picture experts group, MPEG) 1, MPEG 2, MPEG 3, and MPEG 4.

The button 854 may include a power button, a volume button, and the like. The button 854 may be a mechanical button. It can also be a touch button. The electronic device 800 may receive a button input, and generate a button signal input related to a user setting and function control of the electronic device 800.

The indicator 855 may be an indicator light, and may be configured to indicate a charging status and a power change, or may be configured to indicate a message, a missed call, a notification, and the like.

The motor 856 may generate a vibration prompt. The motor 856 may be used for an incoming call vibration prompt and a touch vibration feedback. For example, touch operations performed on different applications (such as photographing and audio playing) may correspond to different vibration feedback effects. The motor 856 may also correspond to different vibration feedback effects for touch operations performed on different areas of the display 851. Different application scenarios (for example, a time reminder, information receiving, an alarm clock, a game) may also correspond to different vibration feedback effects. The touch vibration feedback effect can also be customized.

The touch sensor 860A may also be referred to as a "touch panel". The touch sensor 860A may be disposed on the display 854, and the touch sensor 860A and the display 851 constitute a touchscreen, which is also referred to as a "touch screen". The touch sensor 860A is configured to detect a touch operation acting on or near the touch sensor 860A. The touch sensor 860A may transfer the detected touch operation to the application processor to determine a touch event type. Visual output related to touch operations may be provided through the display 851. In some other embodiments, the touch sensor 860A may also be disposed on a surface of the electronic device at a location different from that of the display 851.

The fingerprint sensor 860B may be configured to collect a fingerprint. The electronic device may implement fingerprint-based unlocking, application lock access, fingerprint-based photographing, fingerprint-based call answering, and the like by using a feature of the collected fingerprint.

In some other embodiments, the processor 810 may further include one or more interfaces. For example, the interface may be a SIM card interface 852. For another example, the interface may alternatively be a USB interface 870. The processor 810 in this embodiment of this application may be connected to different modules of the electronic device through an interface, so that the electronic device 800 can implement different functions. For example, photographing, processing, etc. It should be noted that a connection manner of an interface in the electronic device 800 is not limited in this embodiment of this application.

The SIM card interface 852 may be configured to connect to a SIM card. The SIM card may be inserted into the SIM card interface 852, or removed from the SIM card interface 852, to implement contact and separation from the electronic device 800. The electronic device 800 may support one or N SIM card interfaces, where N is a positive integer greater than 1. The SIM card interface 852 may support a nano-SIM card, a micro-SIM card, a SIM card, and the like. A plurality of cards may be inserted into the same SIM card interface 852 at the same time. Types of the plurality of cards may be the same or different. The SIM card interface 852 may also be compatible with different types of SIM cards. The SIM card interface 852 may also be compatible with an external memory card. The electronic device 800 interacts with a network through the SIM card, to implement functions such as calling and data communication. In some embodiments, the electronic device 800 uses an eSIM, that is, an embedded SIM card. The eSIM card may be embedded in the electronic device, and cannot be separated from the electronic device 800.

The USB interface 870 is an interface that complies with the USB standard specification. For example, the USB interface 870 may include a Mini USB interface, a micro USB interface, a USB Type C interface, and the like. The USB interface 870 may be configured to connect to a charger to charge the electronic device 800, or may be configured to transmit data between the electronic device 800 and a peripheral device. It can also be used to connect to a headset and play audio through the headset.

The charging management module 880 is configured to receive charging input from the charger. The charger may be a wireless charger, or may be a wired charger. In some embodiments of wired charging, the charging management module 880 may receive charging input from the wired charger through the USB interface 870. In some embodiments of wireless charging, the charging management module 880 may receive wireless charging input through a wireless charging coil of the electronic device. When charging the battery 882, the charging management module 880 may further supply power to the electronic device 800 by using the power management module 881.

The power management module 881 is configured to connect the battery 882, the charging management module 880, and the processor 810. The power management module 881 receives input from the battery 882 and/or the charging management module 880, and supplies power to the processor 810, the internal memory 821, the external memory, the display 851, the camera 853, the mobile communication module 831, the wireless communication module 832, and the like. The power management module 884 may be further configured to monitor parameters such as a battery capacity, a quantity of battery cycles, and a battery health status (electric leakage or impedance). In some other embodiments, the power management module 881 may also be disposed in the processor 810. In some other embodiments, the power management module 881 and the charging management module 880 may also be disposed in a same component.

It may be understood that an interface connection relationship between the modules shown in this embodiment of this application is merely an example for description, and does not constitute a limitation on the structure of the electronic device 800. In some other embodiments of this application, the electronic device 800 may alternatively use different interface connection manners or a combination of a plurality of interface connection manners in the foregoing embodiment. It should be understood that the hardware structure shown in FIG. 8 is merely an example. The electronic device in this embodiment of this application may have more or fewer components than those shown in the figure, may combine two or more components, or may have different component configurations. Various components shown in the figure may be implemented in hardware including one or more signal processing and/or application-specific integrated circuits, software, or a combination of hardware and software.

The foregoing AP may be a processor 810, and the CSS and the RRC modules are submodules in the modem that may perform steps in the foregoing method embodiments. All related content may be cited in function descriptions of corresponding function modules. Details are not described herein again.

The electronic device provided in this embodiment is configured to perform the foregoing cell handover method, and therefore can achieve the same effect as the foregoing implementation method.

Embodiments of this application further provide a computer storage medium. The computer storage medium stores computer instructions. When the computer instructions are run on an electronic device, the electronic device performs the related method steps, to implement the cell handover method in the foregoing embodiments.

An embodiment of this application further provides a computer program product. When the computer program product runs on a computer, the computer is enabled to perform the foregoing related steps, to implement the cell handover method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the image cell handover method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

It should be understood that the terms "system" and "network" may be used interchangeably in embodiments of this application. "At least one" means one or more, and " a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and " second" in embodiments of this application are for distinguishing between a plurality of objects, but are not intended to limit an order, a time sequence, priorities, or importance of the plurality of objects. For example, the first cell handover list and the second cell handover list are merely used to distinguish different cell handover lists, but do not indicate different priorities, importance, or the like of the two types of information.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A cell handover method, comprising:
sending, by a first module of a terminal device, a first request message to a second module of the terminal device, wherein the first request message is used to request a first cell handover list corresponding to a first tracking area code TAC, and the first TAC is a TAC of a current cell of the terminal device;
obtaining, by the first module, first information from the second module, wherein the first information indicates the first cell handover list; and
assisting, by the first module, cell handover based on the first cell handover list.

2. The method according to claim 1, wherein the first request message comprises the first TAC, the first TAC corresponds to a first line, and the first cell handover list is a cell handover list corresponding to the first line.

3. The method according to claim 2, wherein the first request message further comprises a first cell identifier, and the first line is a line corresponding to the first TAC and the first cell identifier.

4. The method according to claim 1, wherein before the sending, by a first module of a terminal device, a first request message to a second module of the terminal device, the method further comprises:
receiving, by the first module, a TAC list from the second module, wherein the TAC list comprises a correspondence between a TAC and a line; and
determining, by the first module based on the TAC list, a first line corresponding to the first TAC; and
the sending, by a first module of a terminal device, a first request message to a second module of the terminal device comprises: sending, by the first module to the second module, the first request message carrying the first line.

5. The method according to claim 2 or 4, wherein after the obtaining, by the first module, first information from the second module, the method further comprises:
determining, by the first module, whether the first line comprises a line corresponding to the first cell identifier; and
resending the first request message to the second module when the line corresponding to the first cell identifier is not comprised.

6. The method according to any one of claims 1 to 5, wherein the first cell handover list comprises a cell identifier of a cell on the first line and frequency information used by each cell.

7. The method according to claim 6, the assisting, by the first module, cell handover based on the first cell handover list comprises:
determining, by the first module, a frequency after a current frequency based on the first cell handover list; and
measuring, by the first module, a cell corresponding to the frequency after the current frequency, and reporting a measurement result to a network device.

8. The method according to any one of claims 1 to 7, wherein the first information further comprises a second cell handover list corresponding to a second line, the second line is different from the first line, and the second line is a line in a moving direction of the first line.

9. The method according to claim 8, before the obtaining, by the first module, first information from the second module, the method further comprises:
determining, by the second module, a data volume comprised in the first cell handover list; and
transferring, by the second module, the first cell handover list to the first module when the data volume is greater than or equal to a data volume threshold; or
transferring, by the second module, the first cell handover list and the second cell handover list to the first module when the data volume is less than the data volume threshold.

10. The method according to claim 8, after the assisting, by the first module, cell handover based on the first cell handover list, the method further comprises:
assisting, by the first module, cell handover based on the second cell handover list.

11. The method according to any one of claims 1 to 10, wherein the sending, by a first module of a terminal device, a first request message to a second module of the terminal device comprises:
sending, by the first module, the first request message to the second module when determining that the terminal device is in a preset module or a moving speed of the terminal device is greater than a preset threshold.

12. The method according to any one of claims 1 to 11, wherein the first module is a modem, and the second module is an application processor.

13. A cell handover method, comprising:
sending, by a first module of a terminal device to a second module of the terminal device, a first request message that carries a first cell identifier, wherein the first request message is used to request a first cell handover list corresponding to the first cell identifier, and the first cell identifier is an identifier of a current cell of the terminal device;
obtaining, by the first module, first information from the second module, wherein the first information indicates the first cell handover list; and
assisting, by the first module, cell handover based on the first cell handover list.

14. The method according to claim 13, wherein the first cell identifier corresponds to a first line, and the first cell handover list is a cell handover list corresponding to the first line.

15. The method according to claim 13 or 14, wherein the first information further comprises a second cell handover list corresponding to a second line, the second line is different from the first line, and the second line is a line in a moving direction of the first line.

16. The method according to any one of claims 13 to 15, wherein the first module is a modem, and the second module is an application processor.

17. A communication apparatus, wherein the communication apparatus comprises a processor, a modem, and a memory, the memory is configured to store a computer program, and the processor is configured to execute the computer program stored in the memory, to enable the apparatus to perform the method according to any one of claims 1 to 16.

18. A computer-readable storage medium, wherein the computer-readable storage medium stores a computer program; and when the computer program is executed by a computer, the computer is enabled to perform the method according to any one of claims 1 to 16.

19. A communication apparatus, wherein the chip comprises at least one processor, an interface circuit, and a memory, the memory, the interface circuit, and the at least one processor are interconnected through a line, the memory stores a computer program, and when the computer program is executed by the at least one processor, the chip implements the method according to any one of claims 1 to 12 or the method according to any one of claims 13 to 16.

20. A computer program product, wherein when the computer program product runs on an electronic device, the electronic device is enabled to perform the method according to any one of claims 1 to 12 or the method according to any one of claims 13 to 16.
